# EUROPÄISCHE PATENTSCHRIFT

(11) **EP 3 894 257 B1**
(45) Veröffentlichungstag und Bekanntmachung des Hinweises auf die Patenterteilung: **11.01.2023**
(21) Anmeldenummer: 19813765.5
(22) Anmeldetag: 29.11.2019
(51) Int. Cl.: B60R 16/02, B60K 37/06

(54) **DACHKONSOLE FÜR EIN FAHRZEUG**
ROOF CONSOLE FOR A VEHICLE
CONSOLE DE TOIT POUR UN VÉHICULE

(30) Priorität: 13.12.2018 DE 102018221709
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: SEIDL, Nicolas, 38106 Braunschweig (DE); ROSILIUS, Marcel, 38440 Wolfsburg (DE)
(86) Internationale Anmeldenummer: PCT/EP2019/083032
(87) Internationale Veröffentlichungsnummer: WO 2020/120166

(56) Entgegenhaltungen:
- CN-U- 207 657 609
- DE-A1-102014 015 403
- US-A1- 2017 253 121

## Beschreibung

Die Erfindung betrifft eine Dachkonsole für ein Fahrzeug.

In vielen Fahrzeugen, insbesondere Personenkraftwagen, sind Dachkonsolen vorhanden, in denen häufig die Bedienelemente für ein Schiebe- und/oder Ausstelldach, gegebenenfalls für einen Sonnenschutz für das Schiebe- oder Ausstelldach, für die Innenraumbeleuchtung und eventuell noch andere Fahrzeugfunktionen integriert sind. Die Dachkonsolen sind gemeinhin vorn, zwischen Schiebe-/Ausstelldach und Frontscheibe und bezogen auf die Fahrzeugbreite mittig angeordnet. Die Bedienelemente für das Schiebe- und/oder Ausstelldach sind zumeist in der Dachkonsole angeordnete mechanische Mehrwegeschalter, mit denen die verschiedenen Dachfunktionen schaltbar sind.

Nachteilig an diesen Dachkonsolen sind die kostenintensiven und reparaturanfälligen mechanischen Mehrwegeschalter. Zudem ist es über den Mehrwegschalter schwierig automatische und manuelle Öffnungs- beziehungsweise Schließvorgänge aller Öffnungsfunktionen (wie Schiebe- und Ausstellfunktionen) abzudecken.

US 2017/253121 A1 offenbart eine Dachkonsole für ein Fahrzeug, die ein Touch-Slide-Bedienelement zur Steuerung von Funktionselementen des Fahrzeuges aufweist.

Der Erfindung liegt nun die Aufgabe zugrunde, eine Dachkonsole vorzuschlagen, die kostengünstig herzustellen und einfach zu montieren ist sowie eine einfache, möglichst blinde, Bedienung der Dachfunktionen ermöglicht.

Erfindungsgemäß wird diese Aufgabe durch eine Dachkonsole mit den Merkmalen des Anspruches 1 gelöst. Vorteilhafte Weiterbildungen der Erfindung sind Gegenstand von Unteransprüchen.

Die erfindungsgemäße Dachkonsole für ein Fahrzeug weist mindestens ein Touch-Slide Bedienelement auf. Ein Touch-Slide-Bedienelement im Sinne dieser Erfindung ist ein berührungssensitives Bedienelement mit einer eindimensionalen Ausdehnung. Vorteilhaft können Touch-Slide-Bedienelemente durch die eindimensionale Ausdehnung Gesten in Form von Tippen und Wischen erkennen, wodurch eine Vielzahl von Gesten und Befehlen implementierbar sind. Die Wischbewegungen sind zudem in beide Richtungen der eindimensionalen Ausdehnung detektierbar. Bevorzugt sind die Sensoren der Touch-Bedienelemente dabei kapazitive Sensoren, da diese kostengünstig erhältlich sind und ein gutes Ansprechverhalten aufweisen. Es sind jedoch auch andere Systeme, beispielsweise optische oder resistive Sensoren einsetzbar.

Erfindungsgemäß ist die Dachkonsole derart konfiguriert, dass eine Wischbewegung über eine definierte Länge I2 und das anschließende Verweilen des Fingers nach der Wischbewegung am Endpunkt der Wischbewegung eine Öffnungs- oder Schließbewegung auslöst, die bis zum Abheben des Fingers andauert. Die definierte Länge I2 ist so gewählt, dass die Bedienung einfach ist und kaum Aufmerksamkeit erfordert und blind gut zu bewerkstelligen ist, jedoch Fehlbedienungen minimiert werden. Bevorzugt ist die Länge I2 zwischen 50 % und 90 % der Gesamtlänge des Touch-Slide-Bedienelementes, besonders bevorzugt zwischen 60 % und 80 %. Vorteilhaft wird so eine weitere Möglichkeit der Bedienung von Dach oder Sonnenschutz geschaffen, wodurch die Bedienung intuitiver ist.

Das Touch-Slide-Bedienelement der erfindungsgemäßen Dachkonsole ist zur Steuerung von Funktionselementen des Fahrzeuges vorgesehen. Die Funktionselemente können dabei beispielsweise ein Schiebe- und/oder Ausstelldach, ein Sonnenrollo oder anderer öffenbarer Sonnenschutz eines Schiebe-/Ausstelldaches, Funktionsglas, beispielsweise elektrochromes Glas, das eine Verdunklung ermöglicht und als Sonnenschutz Einsatz findet, ein Cabrio Verdeck, eine motorische Heckklappe, ein Fensterheber oder eine Innenraumbeleuchtung des Fahrzeuges sein. Um die Bedienung mehrerer Funktionselemente des Fahrzeuges über ein Touch-Slide-Bedienelement zu ermöglichen, können in der Umgebung des Touch-Slide-Bedienelements Taster (bevorzugt ebenfalls als Touch-Bedienelement ausgeführt) vorgesehen sein, mit denen der Benutzer das mit dem Touch-Slide-Bedienelement zu steuernde Funktionselement auswählt. Bevorzugt sind die Taster zur Auswahl in unmittelbarer Umgebung des Touch-Slide-Bedienelements, um eine einhändige Bedienung zu ermöglichen. Vorteilhaft kann so eine einfache und übersichtliche Bedienung für eine Vielzahl von Fahrzeugfunktionen realisiert werden.

Ein Schiebe-/Ausstelldach bezeichnet hier ein öffenbares Dach, das durch eine Schiebefunktion einen zu öffnenden Dachbereiches über, in oder unter einen benachbarten Dachbereich bewegt. Viele Schiebedächer haben zudem eine Ausstellfunktion, bei der das Dach mit seinem in Fahrtrichtung gesehen hinteren Bereich nach oben angehoben wird, wodurch ein Luftaustausch ermöglicht wird, ohne das Regen in das Fahrzeug eindringen kann. Die Erfindung kann sowohl bei reinen Schiebedächern, reinen Ausstelldächern und Kombinationen eingesetzt werden.

In einer besonders bevorzugten Ausführung können auch mittels eines Touch-Slide-Bedienelements zwei Funktionselemente des Fahrzeuges parallel gesteuert werden. Beispielsweise kann bei der Öffnung der Schiebefunktion des Daches gleichzeitig der Sonnenschutz simultan mit geöffnet werden. Vorteilhaft kann so die Bedienung weiter vereinfacht und damit auch die Ablenkung des Fahrers minimiert werden.

Die erfindungsgemäße Dachkonsole hat bevorzugt ein Steuergerät, dass die eingegebenen Gesten erkennt und in Steuersignale für das Zielgerät (Schiebe-/Ausstelldach, Sonnenrollo, etc.) umwandelt.

Besonders bevorzugt ist die Dachkonsole derart konfiguriert, dass eine Wischbewegung über eine definierte Länge l1 eine automatisierte vollständige Öffnung oder Schließung des Daches oder des Sonnenrollos auslöst. Besonders bevorzugt bewirkt eine Wischbewegung in Öffnungsrichtung des Schiebedaches eine Öffnung des Daches und eine Wischbewegung in Schließrichtung des Daches dessen Schließung. Die definierte Länge l1 ist dabei so ausgewählt, dass ein wesentlicher Teil des Touch-Slide-Bedienelementes überstrichen wird, ohne dass der Nutzer darauf achten muss, die gesamte Länge zu überstreichen. Bevorzugt ist die Länge l1 zwischen 50 % und 90 % der Gesamtlänge des Touch-Slide-Bedienelementes, besonders bevorzugt zwischen 60 % und 80 %. Vorteilhaft kann der Benutzer so durch eine einfache, schnell und blind ausführbare Geste eine vollständige Öffnung beziehungsweise Schließung des Daches bewirken.

Weiterhin bevorzugt kann der Benutzer durch ein weiteres beliebiges Tippen auf das Touch-Slide-Bedienelement die automatisierte vollständige Öffnungs- oder Schließbewegung stoppen. Dabei ist bevorzugt die Empfindlichkeit des Touch-Slide-Bedienelementes so eingestellt, dass eine Fehlbedienung durch ein in die Nähe kommen, beispielsweise durch ein blindes Suchen eines anderen Bedienelementes der Dachkonsole, minimiert werden kann. Vorteilhaft kann der Nutzer so mittels einer kaum Aufmerksamkeit erfordernden Geste das Dach oder den Sonnenschutz auf die gewünschte Öffnungsweite einstellen.

In einer weiteren bevorzugten Ausgestaltung ist das Touch-Slide-Bedienelement der Dachkonsole so konfiguriert, dass ein Tippen an beliebiger Stelle auf das Touch-Slide-Bedienelement eine Bewegung in die Ausstelllage oder ein Schließen des Daches aus der Ausstelllage bewirkt. Weiterhin bevorzugt kann der Öffnungs- oder auch der Schließvorgang durch ein erneutes Tippen gestoppt werden und so die Ausstellposition des Daches eingestellt werden. Auch hier wird vorteilhaft eine einfache, schnell und blind ausführbare Geste geschaffen, die die Ablenkung des Fahrers minimiert.

In einer weiteren bevorzugten Ausgestaltung der Dachkonsole ist das Touch-Slide-Bedienelement zur Steuerung eines Schiebedaches oder Sonnenschutzes derart konfiguriert, dass ein Tippen in die Randbereiche des Touch-Slide-Bedienelements eine Bewegung in die durch den Randbereich gegebene Richtung bewirkt. Bevorzugt findet die Bewegung des Daches oder Sonnenschutzes statt, solange der Finger auf dem Touch-Slide-Bedienelement aufliegt.

In einer alternativen Ausgestaltung kann auch ein Automatiklauf durch ein kurzes Antippen im Randbereich gestartet werden. Dann ist jedoch die oben beschriebene Bedienung der Ausstellfunktion auf den mittleren Bereich des Touch-Slide-Bedienelementes beschränkt.

Die Randbereiche sind dabei so gewählt, dass keine übermäßige Präzision für den Benutzer zur Positionsfindung notwendig ist, jedoch auch eine klare Abgrenzung zum mittleren Bereich gegeben ist. Bevorzugt hat der vordere oder hintere Randbereich jeweils eine Länge von 5 % - 20 % der Gesamtlänge des Touch-Slide-Bedienelementes, besonders bevorzugt zwischen 10 % und 15 %. Vorteilhaft wird so eine weitere Bedienmöglichkeit geschaffen.

In einer besonders bevorzugten Ausgestaltung weist die Dachkonsole zwei direkt nebeneinander positionierte Touch-Slide-Bedienelemente auf, die zudem gleich groß sind. Durch die Positionierung direkt nebeneinander ist es vorteilhaft möglich, beide Touch-Slide-Bedienelemente gleichzeitig mit zwei Fingern einer Hand zu bedienen. Besonders bevorzugt sind Touch-Slide-Bedienelemente für ein Schiebedach und einen Sonnenschutz für das Schiebedach nebeneinander positioniert, da so vorteilhaft Schiebedach und Sonnenschutz vorteilhaft gleichzeitig bedienbar sind.

In einer weiterhin bevorzugten Ausgestaltung ist die Mitte des Touch-Slide-Bedienelements haptisch wahrnehmbar für den Benutzer, beispielsweise durch eine besondere Strukturierung der Oberfläche. Besonders bevorzugt ist die gesamte Oberfläche des Touch-Slide-Bedienelementes haptisch abgesetzt von der Umgebungsfläche, beispielsweise über eine Riffelung in Querrichtung zur Ausdehnungsrichtung des Touch-Slide-Bedienelementes. In einer besonders bevorzugten Ausgestaltung nimmt der Abstand der Querriffelung zum Randbereich des Touch-Slide-Bedienelementes zu. Eine derartige Ausgestaltung vereinfacht vorteilhaft eine Blindbedienung deutlich, da nicht nur das auffinden des Touch-Slide-Bedienelementes erleichtert wird, sondern auch die Positionsfindung darauf.

Weiterhin bevorzugt weist die Dachkonsole zudem eine dimmbare Beleuchtung auf. Bevorzugt eine mittig angeordnete Innenraumbeleuchtung, und/oder mittels seitlich und auf die vorderen Sitze gerichteter Beleuchtung, die besonders zum Lesen geeignet sind. Besonders bevorzugt erfolgt die Beleuchtung mittels LEDs, da diese vorteilhaft kostengünstig und energiesparend sind. In einer besonders bevorzugten Ausgestaltung ist die Beleuchtung dimmbar.

Die Bedienung der dimmbaren Beleuchtung wird bevorzugt realisiert, indem die Lichtaustrittsfläche selbst als Touch-Bedienelement ausgeführt ist. In einer alternativen Ausgestaltung kann auch ein benachbarter Bereich als ein Touch-Bedienelement ausgebildet sein. Bevorzugt erfolgt die Bedienung mittels Tippen, also einem Auflegen und anschließendes Entfernen des Fingers vom Touch-Bedienelement zum Ein-/Ausschalten. Beim Antippen und Halten des Fingers auf dem Bedienelement, auch als Long-Press bezeichnet, wird nach kurzer Verzögerung die Lichtintensität langsam verringert bis der Benutzer den Finger vom Touch-Bedienelement nimmt. Alternativ kann durch das Tippen und Halten auch eine Steigerung der Leuchtintensität ausgelöst werden, bis der Benutzer den Finger vom Touch-Bedienelement der Beleuchtung nimmt. Vorteilhaft ermöglicht die Zusammenlegung aller Beleuchtungsfunktionen in ein Bedienelement eine einfache intuitive Blindbedienung, insbesondere wenn die Lichtaustrittsfläche gleichzeitig Bedienelement ist, da ein optisches Erkennen von Bedienelementen neben den Lichtaustrittsflächen bei eingeschalteter Beleuchtung nur sehr schwer möglich ist.

In einer besonders bevorzugten Ausgestaltung ist eine Bedienung der Fondbeleuchtung des Fahrzeuges ebenfalls über Bedienelemente in der Dachkonsole möglich, bevorzugt ebenfalls dimmbar über ein Touch-Bedienelement wie oben beschrieben. Vorteilhaft kann so die gesamte Innenraumbeleuchtung des Fahrzeuges von den vorderen Sitzplätzen aus bedient werden.

Weitere bevorzugt als Touch-Bedienelement ausgeführte Bedienelemente können eine SOS-Taster, ein Info- oder Pannenruftaster, ein Taster für die Türkontaktvorwahl (also die Vorwahl, ob sich die Beleuchtung beim Öffnen einer Tür automatisch einschalten soll), ein Taster für die Heck- oder Kofferraumklappenöffnung oder -schließung, ein Taster für das Öffnen und Schließen eines Cabrio-Verdecks oder ein Taster für die gesamte Innenbeleuchtung sein. Besonders bevorzugt ist dabei der SOS-Taster unter einer Sicherheitsklappe angeordnet, um vorteilhaft ein ungewolltes Auslösen zu verhindern. Eine Funktionsrückmeldung kann über die Hintergrundbeleuchtung eines im Touch-Bedienelement angeordneten Symbols erfolgen, beispielsweise über einen Farbumschlag. Die Hintergrundbeleuchtung der Touch-Bedienelemente kann dabei vorteilhaft bauraumsparend über einen Lichtleiter realisiert sein.

Alle Touch-Bedienelemente der Dachkonsole sind dabei bevorzugt haptisch wahrnehmbar für den Benutzer, sodass der Benutzer die berührungssensitiven Eingabebereiche blind auffinden und bedienen kann. Hierfür hat der berührungssensitive Eingabebereich eines Touch-Bedienelements eine gegenüber seiner Umgebung anders haptisch wahrnehmbare Oberfläche, beispielsweise ganz oder teilflächig aufgeraut, ganz oder teilflächig beschichtet, oder anderweitig strukturiert. Die Oberfläche des berührungssensitiven Eingabebereichs kann zudem gegenüber seiner Umgebung abgesetzt also erhöht oder vertieft sein, oder eine zumindest teilweise Umrahmung aufweisen. Vorteilhaft kann so eine Blindbedienung erleichtert werden, da der berührungssensitive Eingabebereich ohne Blickkontakt nur durch haptische Wahrnehmung auffindbar ist.

Weiterhin bevorzugt weist die Dachkonsole ein bevorzugt digitales Mikrofon auf, das beispielsweise für eine Freisprechfunktion des Fahrzeuges oder auch für eine Sprachsteuerung eingesetzt werden kann. Vorteilhaft können durch die Position des Mikrofons in der Dachkonsole Sprachsignale von der Fahrer- oder Beifahrerposition mit geringem Einfluss von Umgebungsgeräuschen aufgezeichnet werden.

In einer weiterhin bevorzugten Ausgestaltung können in der Dachkonsole weitere Anzeigen für Fahrzeugfunktionen vorgesehen sein. Diese sind bevorzugt als hintergrundbeleuchtete Symbole ausgeführt. Die Anzeige kann dann durch ein An/Aus der Hintergrundbeleuchtung oder auch mittels eines Farbumschlags realisiert sein. Beispiele für anzeigbare Fahrzeugfunktionen sind eine Passenger Airbag Off Anzeige oder auch eine Türkontaktanzeige, also die Information über noch geöffnete Fahrzeugtüren. Vorteilhaft sind die Anzeigen in der Dachkonsole für alle Fahrzeuginsassen gut sichtbar angeordnet.

Weiterhin bevorzugt weist die Dachkonsole eine Sensorik zur Überwachung des Fahrzeuginnenraumes auf, die beispielsweise für Alarmsysteme nutzbar ist. Vorteilhaft ist der Innenraum, insbesondere der hintere Bereich, aus der Position der Dachkonsole besonders gut überwachbar.

In einer weiteren bevorzugten Ausgestaltung erfolgt die elektrische Verbindung der Dachkonsole mit dem Fahrzeug lediglich über eine vielpolige Steckverbindung. Vorteilhaft kann so der Montageaufwand vermindert werden.

Weitere bevorzugte Ausgestaltungen der Erfindung ergeben sich aus den übrigen, in den Unteransprüchen genannten Merkmalen.

Die verschiedenen in genannten Ausführungsformen der Erfindung sind sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine erfindungsgemäße Dachkonsole,
- Figur 2: die Rückseite der erfindungsgemäßen Dachkonsole, und
- Figur 3: eine nähere Darstellung eines Touch-Slide-Bedienelements.

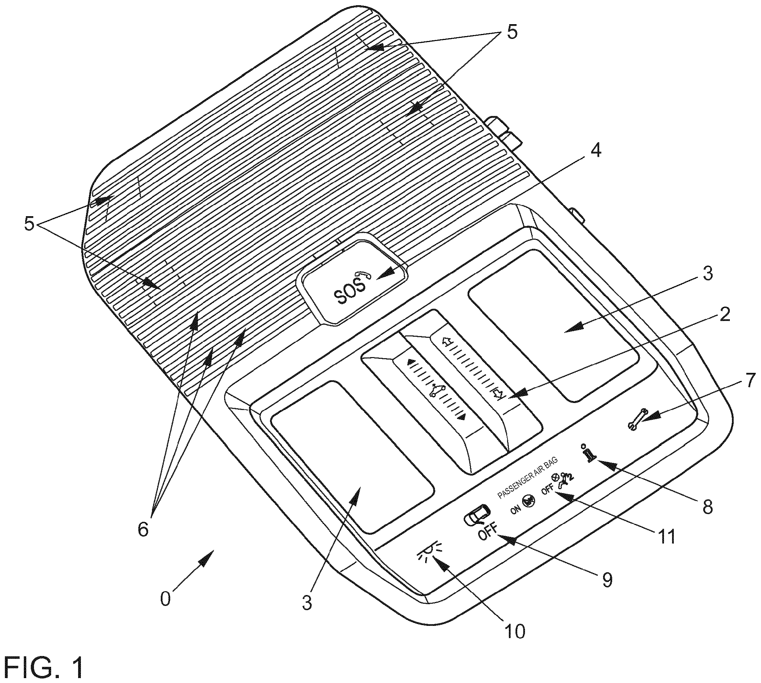

Figur 1 zeigt eine erfindungsgemäße Dachkonsole 0. Diese ist zum Einbau in ein Fahrzeugdach vorgesehen. Diese hat ein Touch-Slide-Bedienelement Dach 1 zur Öffnung des Panoramadaches des Fahrzeuges. Ein weiteres Touch-Slide-Bedienelement Sonnenschutz 2 ist zur Öffnung des im Panoramadach angeordneten Sonnenschutzes. Durch die Positionierung der beiden Touch-Slide-Bedienelemente Dach1 und Sonnenschutz 2 direkt nebeneinander, kann der Nutzer beide Touch-Slide-Bedienelemente 1, 2 durch den Einsatz von zwei Fingern, beispielsweise Zeige- und Mittelfinger gleichzeitig bedienen.

Die Dachkonsole 0 weist weiter zwei Lichtaustrittsflächen 3 auf, die auf die vorderen Sitze gerichtet sind. Die Lichtaustrittsflächen 3 sind gleichzeitig Touch-Bedienelemente. Durch ein Antippen der Touch-Bedienelemente, also der Lichtaustrittsflächen 3, wird die Beleuchtung Ein- und Ausgeschaltet. Bei einem Long-Press, also einem Auflegen und Halten des Fingers auf der Lichtaustrittsfläche 3 wird nach kurzer Verzögerungszeit die Beleuchtungsintensität bei eingeschalteter Beleuchtung langsam gemindert und bei ausgeschalteter Beleuchtung langsam erhöht, bis der Finger von der Lichtaustrittsfläche 3 genommen wird.

Zudem hat die Dachkonsole 0 einen SOS-Taster 4, der unter einer Schutzklappe angeordnet ist, die für ein Auslösen geöffnet werden muss.

Auf der der Frontscheibe abgewandten Seite der Dachkonsole 0 sind Öffnungen 5 für dahinter befindliche Sensorik der Innenraumüberwachung angeordnet. Benachbart befinden sich auf der dem Fahrer zugewandten Seite Öffnungen 6 für ein digitales Mikrofon. Die Öffnungen 5 und 6 sind in matt-schwarzem Kunststoff mit einer geriffelten Oberfläche angeordnet.

Die Dachkonsole 0 hat ein Touch-Bedienelement für einen Pannenruf 7 und ein Touch-Bedienelement für einen Inforuf 8, ein Touch-Bedienelement für die Türkontaktvorwahl 9 und ein Touch-Bedienelement für die Innenraumbeleuchtung 10. Alle Touch-Bedienelemente 7-10 sind durch ein Symbol mit Hintergrundbeleuchtung gekennzeichnet, wobei eine Aktivierung einen Farbumschlag des Symbols bewirkt. Zudem ist eine Passenger Airbag Off Anzeige 11 vorhanden. Die Touch-Bedienelemente für Pannenruf 7, Inforuf 8, Türkontaktvorwahl 9 und Innenraumbeleuchtung 10 sowie die Passenger Airbag Off Anzeige 11 befinden sich nebeneinander auf der der Frontscheibe zugewandten Seite der Dachkonsole 0 und weisen eine durch "In Mould Labelling" hergestellte Hochglanzoberfläche auf.

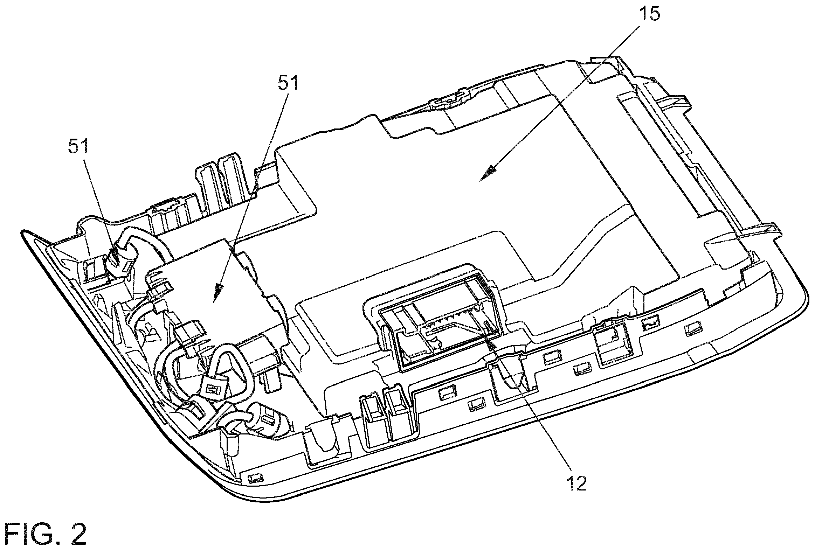

Figur 2 zeigt die Einbauseite, also die im eingebauten Zustand verdeckte Seite, der Dachkonsole 0. Auf dieser ist ein zentraler elektrischer Kontakt 12, in Form einer 26-poligen Buchse angeordnet. Im zentralen elektrischen Kontakt 12 sind alle notwendigen elektrischen Verbindungen zwischen Dachkonsole 0 und Fahrzeug zusammengefasst. Weiter erkennbar sind die Sensorik und Steuerelektronik für die Innenraumüberwachung 51 und eine Abdeckung 15 der darunter befindlichen Elektronik.

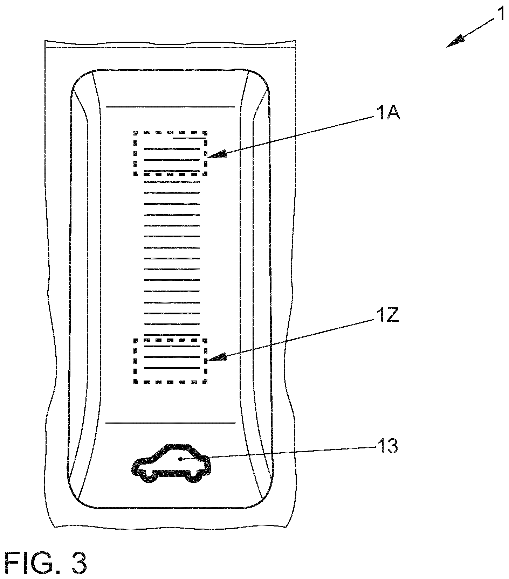

Figur 3 zeigt eine größere Ansicht des Touch-Slide-Bedienelements Dach 1. Es hat Randbereiche 1A, 1Z und ein benachbart angeordnetes Fahrzeugsymbol 13. In Einbauposition ist das Fahrzeugsymbol 13 der Frontscheibe zugewandt. Zur Klarstellung wird angemerkt, dass die in der Figur erkenntlichen Rahmen der Randbereiche 1A, 1Z nur zu Darstellungszwecken ersichtlich sind.

Die Bedienlogik des Touch-Slide-Bedienelements Dach 1 ist wie folgt:
1. Ein einmaliges Tippen auf die Randbereiche 1A, 1Z bewirkt eine automatische vollständige Öffnung oder Schließung der Schiebefunktion. Ein Tippen auf den Randbereich 1Z, also der Frontscheibe zugewandten Seite des Touch-Slide-Bedienelementes 1, ein vollständiges Schließen der Schiebefunktion und ein Tippen auf den Randbereich 1A ein vollständiges Öffnen der Dachfläche.
2. Ein Tippen und Halten (Long-Press) auf die Randbereiche 1A, 1Z bewirkt eine Öffnungsbeziehungsweise Schließbewegung analog zu Punkt 1, die jedoch mit dem Abheben des Fingers vom Randbereich 1A, 1Z des Touch-Slide-Bedienelements 1 stoppt.
3. Ein Tippen während eines automatischen Öffnungs- oder Schließvorganges der Schiebefunktion bewirkt ein Anhalten an der aktuellen Position.
4. In geschlossener Position des Daches bewirkt ein Tippen auf eine beliebige Stelle des Touch-Slide-Bedienelements Dach 1 ein Ausstellen des Daches. Ein nochmaliges Tippen im ausgestellten Zustand bewirkt ein Schließen der Ausstellfunktion. Ein Tippen während der Bewegung in oder aus der Ausstellfunktion bewirkt ein Stopp in der aktuellen Position.
5. Eine Wischbewegung in Richtung des Randbereiches 1A bewirkt eine vollständige Öffnung der Schiebefunktion. Eine Wischbewegung in Richtung des Randbereiches 1Z ein vollständiges Schließen des Daches, also egal ob Ausstell- oder Schiebefunktion.
6. Eine Wischbewegung mit anschließendem Verweilen des Fingers bewirkt eine Öffnungs- oder Schließbewegung der Schiebefunktion bis der Finger vom Touch-Slide-Bedienelements Dach 1 genommen wird. Auch hier bewirkt dabei eine Wischbewegung in Richtung des Randbereichs 1A eine Öffnung und in Richtung des Randbereichs 1Z eine Schließung.

Die Bedienlogik des Touch-Slide-Bedienelements Sonnenschutz 2 (siehe Figur 1) ist analog zur oben beschriebenen Bedienlogik des Touch-Slide-Bedienelements Dach 1. Es entfallen jedoch die Bedienfunktionen für die Ausstellfunktion unter Punkt 4.. In analoger Weise kann auch die Bedienung der Verdunklung von Funktionsglas erfolgen.

### Bezugszeichenliste

- 0: Dachkonsole
- 1: Touch-Slide-Bedienelement Dach
- 2: Touch-Slide-Bedienelement Sonnenschutz
- 3: Lichtaustrittsfläche
- 4: SOS-Taster
- 5: Öffnungen Sensorik Innenraumüberwachung
- 51: Sensorik und Steuerelektronik der Innenraumüberwachung
- 6: Öffnungen Mikrofon
- 7: Touch-Bedienelement Pannenruf
- 8: Touch-Bedienelement Inforuf
- 9: Touch-Bedienelement Türkontaktvorwahl
- 10: Touch-Bedienelement Innenraumbeleuchtung
- 11: Anzeige Passenger Airbag Off
- 12: zentraler elektrischer Kontakt
- 13: Fahrzeugsymbol
- 1A: Randbereich
- 1Z: Randbereich

## Patentansprüche

1. Dachkonsole (0) für ein Fahrzeug aufweisend mindestens ein Touch-Slide Bedienelement (1, 2), das zur Steuerung von Funktionselementen des Fahrzeuges konfiguriert ist, **dadurch gekennzeichnet, dass** das Touch-Slide-Bedienelement (1, 2) derart konfiguriert ist, dass eine Wischbewegung über eine definierte Länge I2 und ein Verweilen des Fingers nach der Wischbewegung eine Öffnungs- oder Schließbewegung des Funktionselementes des Fahrzeuges auslöst, die bis zum Abheben des Fingers andauert.

2. Dachkonsole (0), nach Anspruch 1, **dadurch gekennzeichnet, dass** das Funktionselement des Fahrzeuges ein Schiebe- und/oder Ausstelldach, ein öffenbarer Sonnenschutz eines Schiebe-/Ausstelldaches, verdunkelbares Funktionsglas, ein Cabrio Verdeck, eine motorische Heckklappe, ein Fensterheber oder eine Innenraumbeleuchtung des Fahrzeuges ist.

3. Dachkonsole (0), nach einem der vorangehenden Ansprüche, **dadurch gekennzeichnet, dass** das Touch-Slide-Bedienelement (1, 2) einen kapazitiven Sensor aufweist.

4. Dachkonsole (0), nach einem der vorangehenden Ansprüche, **dadurch gekennzeichnet, dass** das Touch-Slide-Bedienelement (1, 2) derart konfiguriert ist, dass eine Wischbewegung über eine definierte Länge l1 eine automatisierte vollständige Öffnung oder Schließung des Funktionselementes des Fahrzeuges auslöst.

5. Dachkonsole (0), nach Anspruch 4, **dadurch gekennzeichnet, dass** ein beliebiges Tippen auf das Touch-Slide-Bedienelement (1, 2) während der automatisierten vollständigen Öffnung oder Schließung die automatisierte vollständige Öffnungs- oder Schließbewegung stoppt.

6. Dachkonsole (0) nach einem der vorangehenden Ansprüche, **dadurch gekennzeichnet, dass** das Touch-Slide-Bedienelement (1, 2) zur Steuerung eines Schiebe-/Ausstelldaches derart konfiguriert ist, dass ein beliebiges Tippen auf das Touch-Slide-Bedienelement (1, 2) eine Bewegung in die Ausstelllage oder ein Schließen des Daches aus der Ausstelllage bewirkt.

7. Dachkonsole (0) nach einem der vorangehenden Ansprüche, **dadurch gekennzeichnet, dass** das Touch-Slide-Bedienelement (1, 2) zur Steuerung eines Schiebe-/Ausstelldaches derart konfiguriert ist, dass ein Tippen in die Randbereiche (1A, 1Z) des Touch-Slide-Bedienelements (1, 2) eine Bewegung in die durch den Randbereich (1A, 1Z) gegebene Richtung bewirkt.

8. Dachkonsole (0), nach einem der vorangehenden Ansprüche, **dadurch gekennzeichnet, dass** die Dachkonsole (0) zwei direkt nebeneinander angeordnete Touch-Slide-Bedienelemente (1, 2) aufweist.

9. Dachkonsole (0) nach einem der vorangehenden Ansprüche, **dadurch gekennzeichnet, dass** die Dachkonsole (0) ein oder mehrere der folgenden Bauteile aufweist: dimmbare Beleuchtung, digitales Mikrofon, Passenger Airbag Off Anzeige (11), Sensorik zur Überwachung des Fahrzeuginnenraumes (51), SOS-Taster (4).

## Claims

1. Roof console (0) for a vehicle having at least one touch-slide operating element (1, 2) which is configured to control functional elements of the vehicle, **characterized in that**
the touch-slide operating element (1, 2) is configured such that a swiping movement over a defined length l2 and a pause of the finger after the swiping movement triggers an opening or closing movement of the functional element of the vehicle which lasts until the finger is lifted off.

2. Roof console (0) according to claim 1, **characterized in that** the functional element of the vehicle is a sliding and/or tilting sunroof, an openable sun protection of a sliding/tilting sunroof, darkenable functional glass, a convertible top, a motorized tailgate, a window lifter, or an interior lighting of the vehicle.

3. Roof console (0) according to one of the preceding claims, **characterized in that** the touch-slide operating element (1, 2) has a capacitive sensor.

4. Roof console (0) according to any one of the preceding claims, **characterized in that** the touch-slide operating element (1, 2) is configured such that a swiping movement over a defined length l1 triggers an automated complete opening or closing of the functional element of the vehicle.

5. Roof console (0) according to claim 4, **characterized in that** any tapping on the touch-slide operating element (1, 2) during the automated complete opening or closing stops the automated complete opening or closing movement.

6. Roof console (0) according to any one of the preceding claims, **characterized in that** the touch-slide operating element (1, 2) is configured to control a sliding/tilting sunroof such that any tapping on the touch-slide operating element (1, 2) causes a movement into the tilted position or a closing of the roof from the tilted position.

7. Roof console (0) according to any one of the preceding claims, **characterized in that** the touch-slide operating element (1, 2) is configured to control a sliding/tilting roof such that tapping at the edge regions (1A, 1Z) of the touch-slide operating element (1, 2) causes a movement in the direction given by the edge region (1A, 1Z).

8. Roof console (0) according to any one of the preceding claims, **characterized in that** the roof console (0) has two touch-slide operating elements (1, 2) arranged directly next to one another.

9. Roof console (0) according to any one of the preceding claims, **characterized in that** the roof console (0) has one or more of the following components: dimmable lighting, digital microphone, passenger airbag-off display (11), sensor system for monitoring the vehicle interior (51), SOS button (4).

## Revendications

1. Console de toit (0) destinée à un véhicule, comportant au moins un élément de commande tactile à glissement (1, 2), qui est configuré pour la commande d'éléments fonctionnels du véhicule, **caractérisée en ce que**
l'élément de commande tactile à glissement (1, 2) est configuré de telle sorte qu'un mouvement de glissement sur une longueur définie l2 et une pause du doigt après le mouvement de glissement déclenchent un mouvement d'ouverture ou de fermeture de l'élément fonctionnel du véhicule, qui dure jusqu'au retrait du doigt.

2. Console de toit (0), selon la revendication 1, **caractérisée en ce que** l'élément fonctionnel du véhicule est un toit coulissant et/ou inclinable, une protection solaire pouvant être ouverte d'un toit coulissant/inclinable, un verre fonctionnel pouvant être obscurci, une capote de cabriolet, un hayon motorisé, un lève-vitre ou un éclairage intérieur du véhicule.

3. Console de toit (0), selon l'une quelconque des revendications précédentes, **caractérisée en ce que** l'élément de commande tactile à glissement (1, 2) présente un capteur capacitif.

4. Console de toit (0), selon l'une quelconque des revendications précédentes, **caractérisée en ce que** l'élément de commande tactile à glissement (1, 2) est configuré de telle sorte qu'un mouvement de glissement sur une longueur définie 11 déclenche une ouverture ou une fermeture complète automatisée de l'élément fonctionnel du véhicule.

5. Console de toit (0), selon la revendication 4, **caractérisée en ce qu'**un toucher quelconque sur l'élément de commande tactile à glissement (1, 2), pendant l'ouverture ou la fermeture complète automatisée, arrête le mouvement d'ouverture ou de fermeture complète automatisée.

6. Console de toit (0) selon l'une quelconque des revendications précédentes, **caractérisée en ce que** l'élément de commande tactile à glissement (1, 2) est configuré pour la commande d'un toit coulissant/inclinable, de sorte qu'un toucher quelconque sur l'élément de commande tactile à glissement (1, 2) entraîne un mouvement dans la position d'ouverture ou une fermeture du toit à partir de la position d'ouverture.

7. Console de toit (0) selon l'une quelconque des revendications précédentes, **caractérisée en ce que** l'élément de commande tactile à glissement (1, 2) est configuré pour la commande d'un toit coulissant/inclinable, de sorte qu'un toucher dans la zone de bordure (1A, 1Z) de l'élément de commande tactile à glissement (1, 2) entraîne un mouvement dans la direction indiquée par la zone de bordure (1A, 1Z).

8. Console de toit (0), selon l'une quelconque des revendications précédentes, **caractérisée en ce que** la console de toit (0) présente deux éléments de commande tactile à glissement (1, 2) agencés directement l'un à côté de l'autre.

9. Console de toit (0) selon l'une quelconque des revendications précédentes, **caractérisée en ce que** la console de toit (0) présente un ou plusieurs des composants suivants : éclairage modulable, microphone numérique, affichage de coupure de coussin de sécurité gonflable de passager (11), système de capteur pour la surveillance de l'intérieur du véhicule (51), poussoir SOS (4).
